# EUROPÄISCHE PATENTANMELDUNG

(11) **EP 1 426 283 A2**
(43) Veröffentlichungstag der Anmeldung: **09.06.2004**
(21) Anmeldenummer: 03027056.5
(22) Anmeldetag: 25.11.2003
(51) Int. Cl.: B62M 9/10, F16H 9/24, F16H 55/30

(54) **Kettenradsatz**

(30) Priorität: 05.12.2002 DE 10256746
(71) Anmelder: HANS HELMIG GmbH, D-51491 Overath (DE)
(72) Erfinder: Helmig, Benno, Dipl.-Kfm., 51069 Köln (DE)
(74) Vertreter: Nau, Walter, Dipl.-Ing.

(57) **Zusammenfassung**

Kettenradsatz mit zumindest zwei nebeneinander angeordneten Kettenrädern (1, 2) unterschiedlicher Zähnezahlen für Rollenketten-Schaltgetriebe, deren Rollenkette (3) wahlweise vom kleineren (1) auf das größere Kettenrad (2) und umgekehrt mittels einer die Kette führenden Schaltvorrichtung verschoben werden kann, wobei zumindest je das größere Kettenrad (2) Kettenfangzähne (6) aufweist, vor denen in Drehrichtung gesehen Zahnlücken (7) von zumindest einer Teilung der Rollenkette (3) bis zu Voreilzähnen (8) vorgesehen sind, und wobei beim Wechsel von einem kleineren Kettenrad (1) auf ein größeres (2) der Kopf des jeweiligen Kettenfangzahnes (6) in eine Öffnung zwischen zwei Rollen (4) und zwei Laschen (5) der Rollenkette (3) eingreift, und der Abstand zwischen dem Voreilzahn (8) und dem Kettenfangzahn (6) an den Enden der Zahnlücke (7) ein Mehrfaches der Kettenteilung beträgt, zuzüglich derselben Anzahl des halben Betrages des Gelenkspiels in den Kettengliedern.

## Beschreibung

Die Erfindung bezieht sich auf einen Kettenradsatz mit zumindest zwei nebeneinander angeordneten Kettenräder unterschiedlicher Zähnezahlen für Rollenketten-Schaltgetriebe, deren Rollenkette wahlweise vom kleineren auf das größere Kettenrad und umgekehrt mittels einer die Kette führenden Schaltvorrichtung verschoben werden kann, wobei zumindest je das größere Kettenrad Kettenfangzähne (KFZ) aufweist, vor denen in Drehrichtung gesehen Zahnlücken von zumindest einer Teilung der Rollenkette bis zu Voreilzähnen vorgesehen sind, und wobei beim Wechsel von einem kleineren Kettenrad auf ein größeres Kettenrad der Kopf des jeweiligen Kettenfangzahnes in eine Öffnung zwischen zwei Rollen und zwei Laschen der Rollenketten eingreift.

Ein derartiger Kettenradsatz ist aus der DE- 30 37 857 C2 bekannt. Der Abstand der Zähne ist nicht an jeder Stelle des Kettenradumfanges gleich der Kettenteilung ausgeführt. Dabei entstehen Zahnlücken zwischen zwei Zähnen, die den Wechsel der Kette von einem Kettenrad zum anderen an diesen Stellen vereinfachten sollen. Es hat sich aber gezeigt, dass beim Schaltvorgang, also beim Wechseln der Kette von einem Kettenrad zum anderen, eine Rolle der Kette zu weit außen relativ zur Kettenradmitte des Zahnes am Ende einer Zahnlücke auf eine Zahnflanke aufsetzt und anschließend nach innen rutscht, bis sie auf dem Grundkreis aufliegt. Dadurch entstehen Geräusche und Ungleichförmigkeiten der Momentübertragung.

Es ist weiterhin bekannt, DE- 38 87 076 T2 bei einem Kettenradsatz das größere Kettenrad an diskreten Bereichen dünner auszuführen, so dass die Kette in diesem Bereich axial weiter zum größeren Rad hin verschoben werden kann. Auch diese Maßnahme führt nicht zu der gewünschten Qualität und Leichtgängigkeit beim Wechsel der Kette von einem Kettenrad zum anderen.

Auch ist es bekannt, DE- 29 45 271 C2, jeden zweiten Zahn des größeren Rades wegzulassen, so dass nur in jede zweite Lücke zwischen zwei Rollen der Kette ein Zahn eintritt, um so den Kettenwechsel zu erleichtern. Auch diese Ausgestaltung wird noch nicht als eine voll befriedigende Lösung angesehen.

Der Erfindung liegt die Aufgabe zugrunde, die zum Stand der Technik geschilderten Nachteile zu vermeiden und die Kettenräder eines Kettenradsatzes für eine Kettenschaltung so auszubilden, dass ein möglichst leichter und leiser Schaltvorgang mit geringer Drehmomentunterbrechung ermöglich wird, ohne die Laufeigenschaften der Kette im jeweiligen Kettenrad negativ zu beeinflussen.
Diese Aufgabe der Erfindung wird dadurch gelöst, dass der Abstand zwischen dem Voreilzahn und dem Kettenfangzahn an den Enden der Zahnlücken ein Mehrfaches der Kettenteilung beträgt, zuzüglich derselben Anzahl des halben Betrages des Gelenkspieles in den Kettengliedern.
Vorzugsweise weist der Abstand entsprechender Zahnflanken des Voreilzahnes und des Kettenfangzahnes den dreifachen Wert der Kettenteilung zuzüglich des dreifachen Wertes des halben Betrages des Gelenkspieles der Kette auf. Durch diese Lücken gemäß den Patentansprüchen 1 und 2 wird erreicht, dass die Kette bei der Verschiebung zum Zwecke des Kettenradwechsels einen höchstmöglichen Freiraum erhält, wodurch ein leichter Wechsel der Kettenräder beim Schalten ermöglicht wird.

Die Laufeigenschaften werden optimiert, wenn die Auflagestellen der Rollen der Rollenkette auch im Bereich der Zahnlücken an den Kettenrädern, wie im Patentanspruch 4 definiert, denselben Abstand zum Mittelpunkt des jeweiligen Kettenrades aufweisen. Dadurch ist eine höchstmögliche Gleichförmigkeit der Momentübertragung gewährleistet, da die Ungleichförmigkeit (Polygoneffekt) nur vom Abstand der Rollen vom Mittelpunkt des Kettenrades abhängt und deshalb durch die vorgeschlagene Maßnahme in der Zahnlücke nicht größer wird.
Die Angaben der Abstände zwischen dem Voreilzahn und dem Kettenfangzahn gelten als absolute Werte zwischen den Zähnen. Da der übliche Abstand zwischen zwei Zähnen das Maß einer Kettenteilung zuzüglich eines halben Betrages eines Gelenkgliedes ist, beträgt das zu ändernde Maß für eine erfindungsgemäße Zahnlücke an einem üblichen Kettenrad z. B. das dreifache Maß der üblichen Teilung zuzüglich eines Betrages von 2- mal der Hälfte des Gelenkspieles.

Durch die erfindungsgemäße Zahnlücke und ihre im Weiteren noch beschriebene Ausgestaltung wird auch das Ablaufen der Kette von einem größeren Kettenrad auf ein kleineres durch axiales Verschieben der Kette erleichtert, da der Lasche der Kette Freiraum gelassen wird und diese nicht auf eine Zahnspitze trifft und dadurch hoch gehoben wird. Bei einer ausreichend großen Zahnlücke kann die Kette daher durch ihre axiale bzw. seitliche Flexibilität innerhalb der Zahnlücke so axial zum Kettenradsatz verschoben werden, dass der Kettenfangzahn des größeren Kettenrades bei der Drehung außerhalb der Kette zu liegen kommt und die Kette vom Kettenrad ablaufen kann, um danach auf ein kleineres Rad zu fallen.
Somit wird durch die Zahnlücke der Wechsel der Kette von einem kleineren auf ein größeres als auch von einem größeren auf ein kleineres Kettenrad vereinfacht.

Zur weiteren Ausgestaltung der Erfindung wird vorgeschlagen, dass zwischen der dem Voreilzahn in Richtung der Zahnlücke folgenden Auflagestelle der Rolle der Kette und der nächsten Auflagestelle eine Ausnehmung in der Zahnlücke vorgesehen ist.

Zusätzlich dazu kann im Bereich des Voreilzahnes seitlich zum kleineren Kettenrad eine Aussparung vorgesehen sein, die von der Ausnehmung ausgehend sich in den Bereich des Voreilzahnes erstreckt.
Durch diese vorgenannten weiteren Maßnahmen wird der Kettenwechsel von einem Kettenrad zum anderen und damit der Schaltvorgang weiter vereinfacht und verbessert, weil die Kette beim Schaltvorgang nicht so weit gebogen werden muss, um den Abstand der Kettenräder zu überwinden.
Optimiert wird dies noch dadurch, dass die Aussparung bis in die dem Voreilzahn vorausgehende Rollenauflage reicht und dass der dem Mittelpunkt des Kettenrades zugewandte Rand der Aussparung von dem Grund der Ausnehmung ausgehend entlang der Umfangsrichtung des Kettenrades sich dem Mittelpunkt des Kettenrades nähert, so dass im Moment des Eintretens des Kettenfangzahnes in eine Kettenlücke die Rollenkette nicht am relativ größeren Kettenrad anstößt.

Vorzugsweise sind benachbarte Kettenräder des Kettenradsatz in Umfangsrichtung so zueinander versetzt am Kettenradsatz befestigt, dass auf dem kleineren Kettenrad im Bereich des Voreilzahnes des größeren Rades ein Kettenzahn derart angeordnet ist, dass beim Auflaufen der Rollenkette auf das größere Kettenrad, wenn sie das kleinere Kettenrad nur teilweise verlassen hat, der Kettenfangzahn möglichst genau in eine Kettenlücke der verdrehten und verbogenen Rollenkette eintritt.
Dadurch wird sichergestellt, dass beim Wechsel der Rollenkette von einem kleineren auf ein größeres Kettenrad die Zahnflanke des Fangzahnes passend hinter eine Rolle der Rollenkette greift.

Die Anzahl der Zahnlücken auf den Kettenrädern wird durch die Größe der Kettenräder bzw. ihre Zähnezahl und die zugehörige Zähnezahl des jeweils kleineren oder größeren Kettenrades bestimmt und kann von Fall zu Fall ermittelt werden. Bei nebeneinanderliegenden Kettenrädern mit 20 und 24 Zähnen ergeben sich z.B. vier Stellen, an denen es sinnvoll ist, erfindungsgemäße Zahnlücken vorzusehen, sodass die o.g. Bedingung erfüllt ist.

Zur weiteren Erläuterung der Erfindung wird auf die Zeichnungen verwiesen, in denen ein Ausführungsbeispiel der Erfindung vereinfacht dargestellt ist.

Es zeigen:
- Figur 1:: eine perspektivische Teilansicht zweiter Kettenräder eines Kettenradsatzes mit zugehöriger Kette,
- Figur 2:: ein Kettenrad eines Kettenradsatzes mit einer Zahnlücke und
- Figur 3:: eine Ansicht auf zwei benachbarte Kettenräder eines Kettenradsatzes mit Kette in radialer Blickrichtung auf den Mittelpunkt der Kettenräder gerichtet.

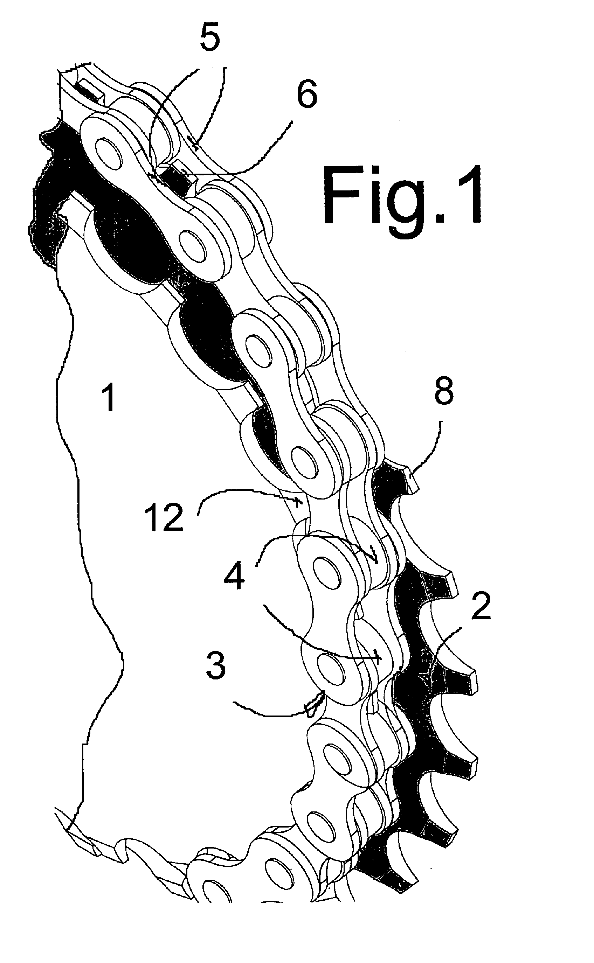

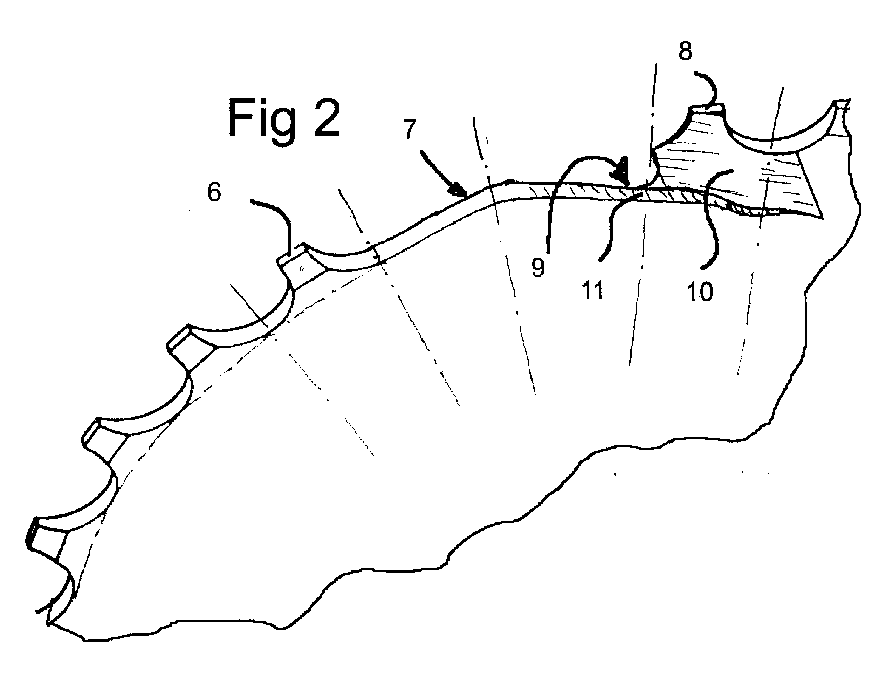

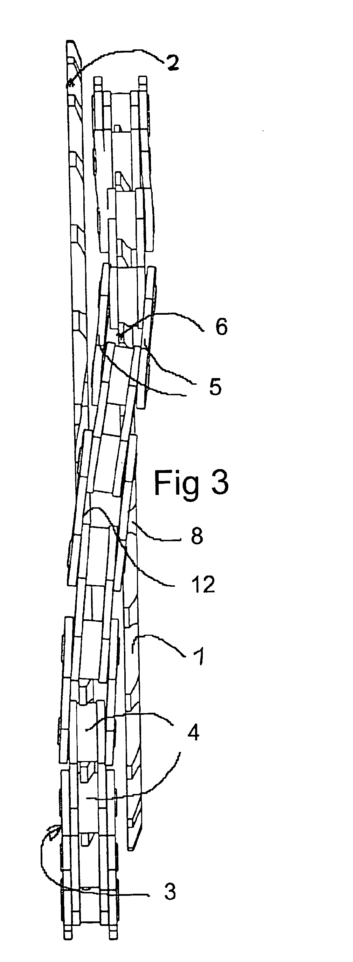

In den Figuren 1 bis 3 ist, soweit im Einzelnen dargestellt, mit 1 ein kleineres Kettenrad bezeichnet, neben dem ein größeres Kettenrad 2 eines sonst nicht dargestellten Kettenradsatzes angeordnet ist. Weiterhin ist mit 3 eine Rollenkette bezeichnet, die in den Figuren 1 und 2 im Übergangsbereich zwischen den beiden Kettenrädern 1 und 2 dargestellt ist und in beide Kettenräder eingreift. Die Rollenkette 3 wird mit Hilfe eines nicht dargestellten Umwerfers, z.B. vom kleineren Kettenrad 1 zum größeren Kettenrad 2 hin axial verschoben, bis ein mit 5 gekennzeichneter Kettenfangzahn in eine Öffnung zwischen zwei Rollen 4 und zwei Laschen 5 der Rollenkette 3 eingreift und damit den Kettenwechsel auf das größere Kettenrad 2 einleitet.
Wie insbesondere Figur 2 zu entnehmen ist, ist neben dem Kettenfangzahn 6 eine Zahnlücke 7 vorgesehen, die bis zu einem Voreilzahn 8 reicht. Die Zahnlücke 7 ist so ausgebildet, dass alle Auflagestellen für die Rollen 4 der Rollenkette 3 den gleichen Abstand vom Mittelpunkt des Kettenrades 2 aufweisen, wie die Rollenauflagen zwischen den übrigen Kettenzähnen, d.h. sie befinden sich auf dem Grundkreis des Kettenrades. Zwischen der vorletzten Auflagestelle für eine Rolle in der Zahnlücke 7 in Richtung auf den Voreilzahn 8 und der Auflagestelle neben dem Voreilzahn 8 ist eine Ausnehmung 9 vorgesehen, an die sich neben dem Voreilzahn 8 bis in die Rollenauflage zwischen dem Voreilzahn 8 und dem nächsten Kettenzahn eine Aussparung 10 anschließt, die sich auf der dem kleineren Kettenrad 1 zugewandten Seite des größeren Kettenrades 2 befindet. Der dem Mittelpunkt des Kettenrades 2 zugewandte Rand 11 der Aussparung 10 nähert sich von der Ausnehmung 9 ausgehend entlang des Kettenrades dem Mittelpunkt dieses Kettenrades, wodurch eine optimale Führung der Rollenkette beim Wechsel von einem Kettenrad zum anderen gewährleistet ist.
Ausdrücklich erwähnt sei noch, dass der Rand der Aussparung nicht stetig verlaufen muss, sondern eine Vertiefung in Richtung des Mittelpunktes des Kettenrades haben kann, um der Form einer Lasche 5 im Bereich des Kettengliedes noch besser angepasst zu sein.

### Bezugszahlenliste

- 1: kleineres Kettenrad
- 2: größeres Kettenrad
- 3: Rollenkette
- 4: Rollen
- 5: Laschen
- 6: Kettenfangzahn
- 7: Zahnlücke
- 8: Voreilzahn
- 9: Ausnehmung
- 10: Aussparung
- 11: Rand der Aussparung
- 12: Kettenzahn

## Patentansprüche

1. Kettenradsatz mit zumindest zwei nebeneinander angeordneten Kettenrädern (1, 2) unterschiedlicher Zähnezahlen für Rollenketten-Schaltgetriebe, deren Rollenkette (3) wahlweise vom kleineren (1) auf das größere Kettenrad (2) und umgekehrt mittels einer die Kette führenden Schaltvorrichtung verschoben werden kann, wobei zumindest je das größere Kettenrad (2) Kettenfangzähne (6) aufweist, vor denen in Drehrichtung gesehen Zahnlücken (7) von zumindest einer Teilung der Rollenkette (3) bis zu Voreilzähnen (8) vorgesehen sind, und wobei beim Wechsel vom kleineren Kettenrad (1) auf das größere (2) der Kopf des jeweiligen Kettenfangzahnes (6) in eine Öffnung zwischen zwei Rollen (4) und zwei Laschen (5) der Rollenkette (3) eingreift,
**dadurch gekennzeichnet, dass** der Abstand zwischen dem Voreilzahn (8) und dem Kettenfangzahn (6) an den Enden der Zahnlücke (7) ein Mehrfaches der Kettenteilung beträgt, zuzüglich derselben Anzahl des halben Betrages des Gelenkspiels in den Kettengliedern.

2. Kettenradsatz nach Anspruch 1,
**dadurch gekennzeichnet, dass** der Abstand entsprechender Zahnflanken des Voreilzahnes (8) und des Kettenfangzahnes (6) den dreifachen Wert der Kettenteilung zuzüglich des dreifachen Wertes des halben Betrages des Kettenspiels in den Kettengliedern aufweist.

3. Kettenradsatz nach Anspruch 2,
**dadurch gekennzeichnet, dass** das Gelenkspiel das Spiel der Rollen (4) auf ihren Gleitflächen (Hülsen) zuzüglich dem Spiel der Bolzen in den Hülsen umfasst.

4. Kettenradsatz nach einem der Ansprüche 1 bis 3,
**dadurch gekennzeichnet, dass** die Mittelpunkte der Rollen (4) der Rollenkette (3) in dem Bereich der Zahnlücken (7) den selben Abstand zum Mittelpunkt des jeweiligen Kettenrades (1 oder 2) haben wie die übrigen Rollen (4), die im Eingriff sind.

5. Kettenradsatz nach einem der vorhergehenden Ansprüche,
**dadurch gekennzeichnet, dass** zwischen der dem Voreilzahn (8) in Richtung der Zahnlücke (7) folgenden Auflagestelle für eine Rolle (4) der Rollenkette (3) und der nächsten Auflagestelle in der Zahnlücke (7) eine Ausnehmung (9) vorgesehen ist.

6. Kettenradsatz nach einem der vorhergehenden Ansprüche,
**dadurch gekennzeichnet**, däss im Bereich des Voreilzahnes (8) seitlich zum kleineren Kettenrad (1) hin eine Aussparung (10) vorgesehen ist, die von der Ausnehmung (9) ausgehend sich bis in den Bereich des Voreilzahnes (8) erstreckt.

7. Kettenradsatz nach einem der vorhergehenden Ansprüche,
**dadurch gekennzeichnet, dass** die Aussparung (10) bis in die dem Voreilzahn (8) vorausgehenden Rollenauflage reicht.

8. Kettenradsatz nach einem der vorhergehenden Ansprüche,
**dadurch gekennzeichnet, dass** der Rand (11) der Aussparung (10) von dem Grund der Ausnehmung (9) ausgehend in Umfangsrichtung des Kettenrades sich dem Mittelpunkt des Kettenrades (1 oder 2) nähert.

9. Kettenradsatz nach einem der vorhergehenden Ansprüche,
**dadurch gekennzeichnet, dass** benachbarte Kettenräder (1,2) in Umfangsrichtung so zueinander versetzt am Kettenradsatz befestigt sind, dass beim Auflaufen der Rollenkette (3) vom kleineren (1) auf das größere Kettenrad (2), wenn die Rollenkette (3) das kleinere Kettenrad (1) nur teilweise verlassen hat, der Kettenfangzahn (6) einen solchen räumlichen Abstand von einem Kettenzahn (12) des kleineren Kettenrades (1) hat, dass der Kettenfangzahn (6) möglichst genau in eine Kettenlücke eintritt, wenn in diesem Moment der Kettenzahn (12) des kleineren Kettenrades (1) aus einer Kettenlücke austritt.
